# FASCICULE DE BREVET EUROPEEN

(11) **EP 0 566 944 B1**
(45) Date de publication et mention de la délivrance du brevet: **17.01.1996**
(21) Numéro de dépôt: 93105915.8
(22) Date de dépôt: 13.04.1993
(51) Int. Cl.: B60S 1/36

(54) **Dispositif d'essuie-glace à bras de longueur active variable**
Scheibenwischeranlage mit aktivem, längenverstellbarem Wischerarm
Windscreen wiper with arm of activity variable length

(30) Priorité: 21.04.1992 FR 9204975
(43) Date de publication de la demande: 27.10.1993
(73) Titulaire: SMH Management Services AG, CH-2501 Biel (CH)
(72) Inventeur: Chevroulet, Tristan, CH-2000 Neuchâtel (CH)
(74) Mandataire: de Montmollin, Henri

(56) Documents cités:
- DE-A- 2 364 427
- FR-A- 2 178 683
- FR-A- 2 613 302

## Description

La présente invention concerne les dispositifs d'essuie-glace en général et, plus particulièrement, un dispositif d'essuie-glace pour véhicule automobile, possédant au moins un balai monté sur un bras principal unique dont la longueur active varie au cours du mouvement d'essuyage.

L'utilisation d'un bras unique dans les dispositifs d'essuie-glace s'impose lorsqu'il est nécessaire de réduire le coût des équipements automobiles. Toutefois, lorsqu'on utilise un bras unique, il convient, le plus souvent, d'adapter la course du bras de manière que la surface balayée par le balai soit la plus large possible pour la sécurité et le confort du conducteur aussi bien que des passagers. Un grand nombre de dispositifs d'essuie-glace à bras unique a déjà été proposé, parmi lesquels on peut citer ceux décrits dans le brevet français FR-A-2 508 399 et dans le brevet allemand DE-A-37 42 635.

Ces dispositifs sont normalement destinés à être montés au centre de la partie inférieure du pare-brise et comportent, en général, un agencement complexe, voire encombrant et coûteux, pour assurer un travail sur une surface de balayage aussi large que possible.

Dans le cas du document français le dispositif d'essuie-glace comporte un boîtier qui renferme un système de transmission à engrenages et manivelle et qui est animé du même mouvement de rotation que celui du bras d'essuie-glace. Ce système de transmission permet d'engendrer un mouvement complexe du bras, mouvement dans lequel ce bras peut passer, au cours de sa rotation, par plusieurs valeurs de longeurs dont notamment deux maximales et trois minimales.

Dans le cas du document allemand, le système de transmission est encore plus compliqué, et ce pour permettre au bras d'essuie-glace d'effectuer un trajet différent aussi bien dans un sens de rotation que dans l'autre.

Non seulement la complexité de ces systèmes connus élève les coûts de fabrication et de montage, mais elle s'accompagne généralement d'une augmentation des moments d'inertie du dispositif; ce qui nécessite un moteur d'entraînement plus puissant et donc également plus cher.

La présente invention a donc pour but principal de fournir un dispositif d'essuie-glace qui soit particulièrement simple et économique.

La présente invention a également pour but de fournir un dispositif d'essuie-glace à bras unique pour véhicule automobile, qui assure une bonne surface de balayage du bras d'essuie-glace et qui est destiné à être monté dans une position proche d'un coin inférieur du pare-brise, tout en présentant un encombrement réduit.

A cet effet, l'invention pour objet un dispositif d'essuie-glace à bras unique du type divulgué dans FR-A-2 508 399 précité et tel que défini par la revendication 1 du brevet.

Grâce à ces caractéristiques on réalise un dispositif d'essuie-glace à bras unique dont la longueur varie au cours du mouvement d'essuyage, le dispositif présentant à la fois un faible nombre de pièces en mouvement et une structure peu compliquée. Ainsi, le montage de ce dispositif est aisé et son encombrement est réduit. Des modes de réalisation de l'invention sont précisés dans les revendications 2 et 3 dépendantes.

D'autres caractéristiques et avantages de la présente invention apparaîtront plus clairement à la lecture de la description suivante de plusieurs modes de réalisation, ladite description étant faite à titre illustratif et en liaison avec les dessins joints dans lesquels :
- la figure 1 montre schématiquement et partiellement un mode de réalisation d'un dispositif d'essuie-glace semblable à celui revendiqué, représenté dans différentes positions et dont certains détails de réalisation sont transposables au dispositif d'essuie-glace de l'invention représenté aux figures 3 et 4;
- la figure 2 est une vue latérale du dispositif d'essuie-glace de la figure 1 et représente en coupe son mécanisme d'entraînement;
- la figure 3 montre schématiquement et partiellement un mode de réalisation du dispositif d' essuie-glace selon l'invention représenté dans différentes positions; et
- la figure 4 est une vue latérale du dispositif d'essuie-glace de la figure 3 et représente en coupe le mécanisme d'entraînement selon l'invention.

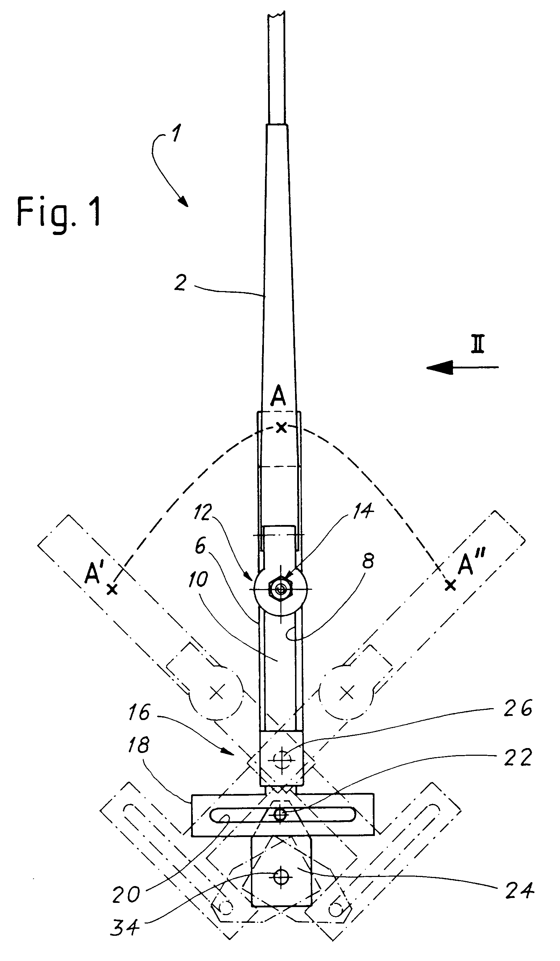

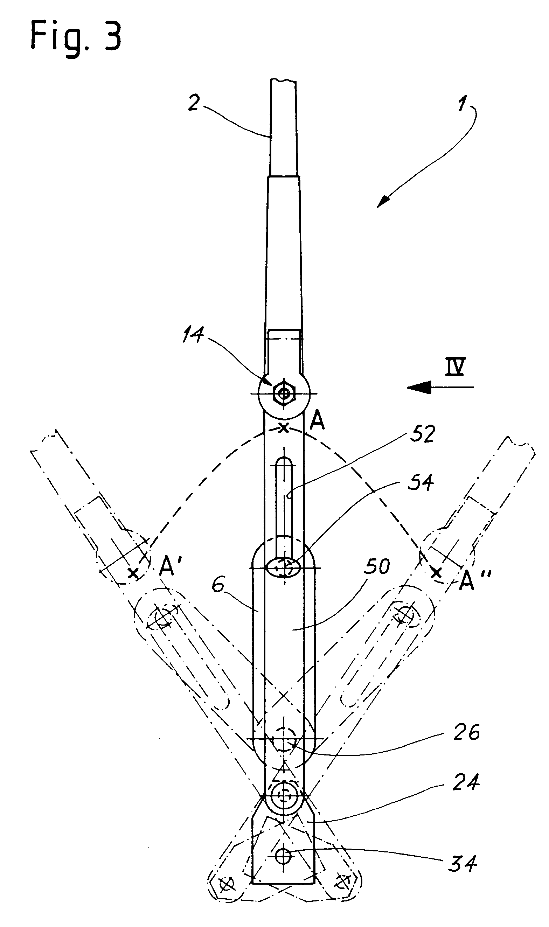

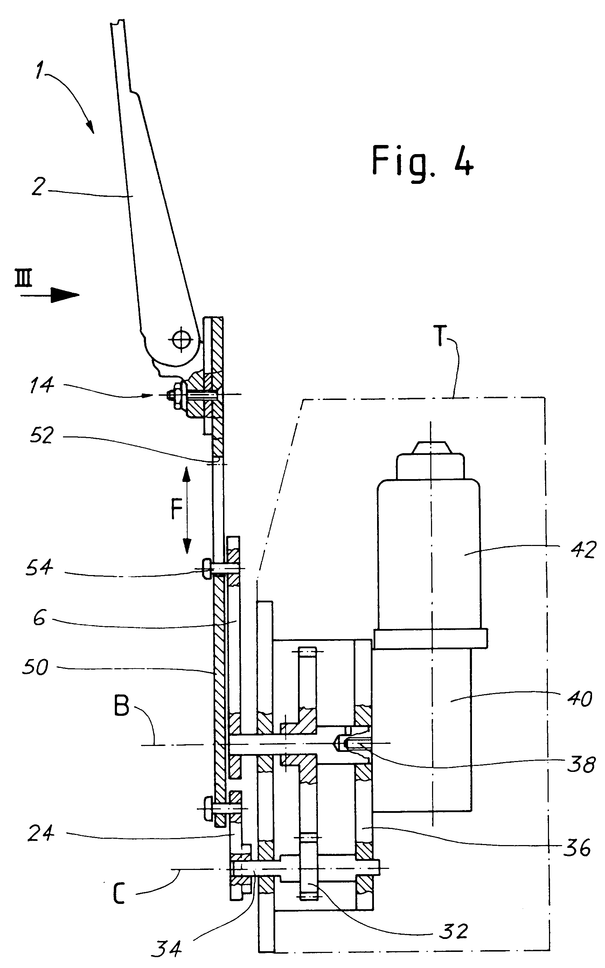

En se référant tout d'abord à la figure 1, on voit un mode de réalisation d'un dispositif d'essuie-glace dont le principe et certains détails de réalisation sont voisins de ceux du dispositif d'essuie-glace de l'invention et sont transposables mutatis mutandis au dispositif illustré aux figures 3 et 4 et qui permettra de faciliter la compréhension du fonctionnement du dispositif d'essuie-glace selon l'invention. Ce mode de réalisation est désigné par la référence numérique générale 1 à la figure 1.

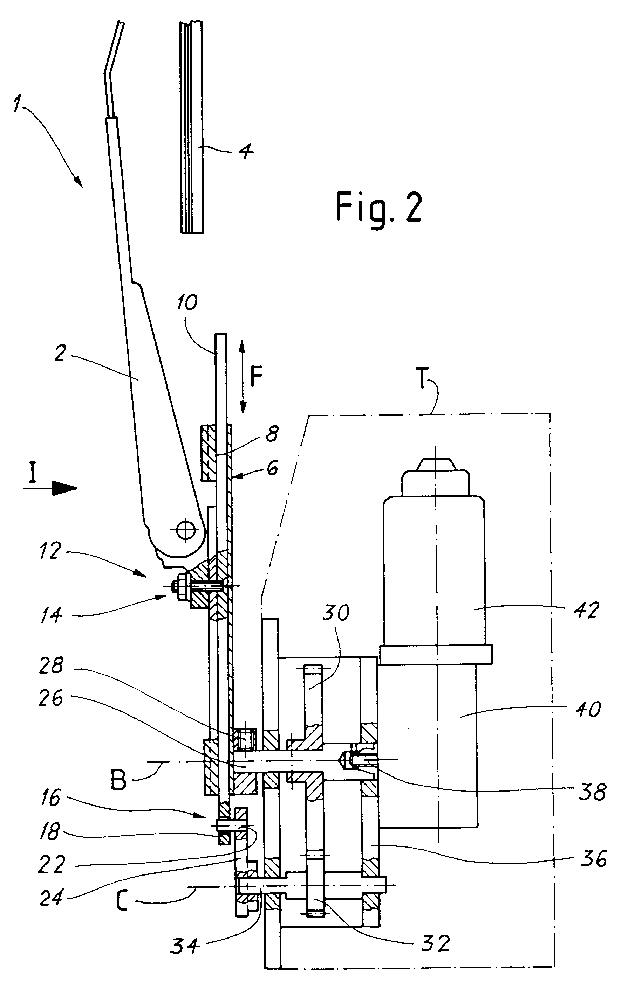

Ce dispositif 1 comporte un bras d'essuie-glace 2 qui est représenté à la figure 1 dans deux positions extrêmes (en traits mixtes) ainsi que dans une position médiane (en traits pleins). Le bras d'essuie-glace 2, sur lequel est classiquement monté un balai 4 (représenté partiellement à la figure 2), est relié, par l'intermédiaire de moyens de couplage décrits ci-après, à un organe de support 6.

Ces moyens de couplage comprennent une glissière 8 ménagée dans l'organe support 6 et dans laquelle peut coulisser un coulisseau 10 dont une première extrémité 12 est fixée au bras 2 au moyen d'un boulon 14. Le coulisseau 10 est maintenu dans la glissière 8 de sorte qu'il peut librement se translater et coulisser dans l'axe longitudinal du bras 2, ce déplacement étant désigné par la flèche à la figure 2.

L'organe de support 6 présente, à une deuxième extrémité 16, une partie 18 de forme oblongue et rectiligne. La partie oblongue 18 s'étend perpendiculairement à la direction longitudinale du coulisseau 10 et est munie d'une rainure 20 également oblongue. La rainure 20 reçoit une goupille 22 solidaire de l'extrémité d'une manivelle 24.

L'organe de support 6 est entraîné, d'une manière qui sera expliquée ci-après en relation avec la figure 2, selon un mouvement de rotation alternatif (entre ses deux positions extrêmes représentées en traits mixtes à la figure 1) autour de son axe de rotation géométrique B. De même, la manivelle 24 est animée d'un mouvement de rotation alternatif (entre ses deux positions extrêmes représentées aussi en traits mixtes à la figure 2) autour de son axe de rotation géométrique C.

La manivelle 24 entraîne, grâce à sa liaison avec le coulisseau 10 par l'intermédiaire de la rainure 20 et de la goupille 22, le coulissement du coulisseau 10 dans la glissière 8 de l'organe de support 6.

Les mouvements combinés de rotation et de translation du coulisseau 10, auquel est fixé le bras 2, ont pour effet de permettre au balai 4 de couvrir une surface adaptée à la forme du pare-brise, en particulier lorsque le dispositif 1 est monté dans une position proche d'un coin inférieur de ce pare-brise.

La figure 1 montre encore, en traits pointillés, le trajet parcouru par un point A du bras d'essuie-glace 1 lors de son mouvement entre ses deux positions extrêmes A' et A''. Ce trajet montre, qu'en position médiane, le bras d'essuie-glace présente une extension maximum alors que dans ses positions extrêmes, son extension est réduite au minimum.

La figure 2 montre, en particulier, les éléments de transmission permettant les mouvements de rotation alternatifs de la glissière 8 et de la manivelle 24. La glissière 8 est rendue solidaire d'un premier axe moteur, 26 au moyen d'une vis 28. L'axe moteur 26 supporte une première roue dentée 30 qui forme un engrenage avec une deuxième roue dentée 32, laquelle est solidaire d'un deuxième axe moteur 34 solidaire de la manivelle 24.

Le rapport d'engrenage est déterminé de manière à permettre les mouvements respectifs de la glissière 10 et de la manivelle 24.

A titre d'exemple, pour un débattement du bras d'essuie-glace 2 de ± 45° et un débattement de la manivelle 22 de ± 130°, le rapport d'engrenage est de 1:2,8.

L'engrenage, formé des première et deuxième roues dentées 30 et 32 et de leurs axes moteurs respectifs 26 et 34, est monté dans un carter 36 qui peut être rendu solidaire du véhicule par des moyens appropriés.

L'axe moteur 26 est solidaire d'un axe 38 de sortie d'une boîte de transmission 40 qui transforme le mouvement circulaire d'un axe de sortie (non représenté) d'un moteur électrique 42 en un mouvement de rotation alternatif d'amplitude donnée.

La réalisation de la boîte de transmission 40 est suffisamment connue de l'homme de l'art pour qu'il ne soit pas nécessaire de la décrire plus avant ici, à titre d'exemple un simple système bielle-manivelle est tout à fait approprié.

On notera que l'ensemble carter 36, boîte de transmission 40 et moteur électrique 42 peut être avantageusement disposé dans un coffret symbolisé par le trait mixte T au dessin.

Chacun des axes 26 et 34 est monté dans le carter 36, de façon classique, à l'aide de deux paliers non représentés.

Les roues dentées sont réalisées, de préférence, en une matière plastique dure, résistant à l'usure et offrant l'avantage de fournir un engrenage particulièrement silencieux.

En se référant aux figures 3 et 4 on voit un mode de réalisation d'un dispositif d'essuie-glace selon l'invention dans lequel on a désigné les éléments identiques à ceux décrits précédemment par les mêmes références numériques.

Alors que dans le dispositif d'essuie-glace décrit en liaison avec les figures 1 et 2 les moyens de couplage entre l'organe de support 6 et le bras 2 comprennent une glissière 8 et un coulisseau 10 à une extrémité duquel s'étend perpendiculairement une partie oblongue 18 munie d'une rainure 20, selon le dispositif d'essuie-glace de l'invention, les moyens de couplage comprennent une pièce de liaison 50 qui s'étend dans le prolongement du bras 2 et qui est fixée rigidement par une première extrémité au bras 2 en étant fixée à rotation par son extrémité opposée à la manivelle 24. La pièce de liaison 50 comprend en outre un rainure 52 qui s'étend longitudinalement par rapport à la pièce 50 et dans laquelle peut coulisser une goupille 54 solidaire de l'organe de support 6

Dans l'exemple décrit, la pièce de liaison 50 est fixée au bras 2 au moyen d'un boulon 14 mais elle peut avantageusement venir d'une seule pièce avec le bras 2.

## Revendications

1. Dispositif d'essuie-glace comportant un bras d'essuie-glace (2) dont la longueur active varie au cours du mouvement de balayage comportant :
- des moyens moteurs comportant un premier axe moteur (26) animé d'un premier mouvement de rotation alternatif et un deuxième axe moteur (34) animé d'un deuxième mouvement de rotation alternatif, l'amplitude de la rotation alternative du deuxième axe (34) étant supérieure à celle du premier axe,
- une manivelle (24) couplée en rotation au deuxième axe moteur d'une part et relié audit bras (2) d'autre part,
- un organe de support (6) du bras couplé en rotation au premier axe moteur (26), et
- des moyens de couplage entre l'organe de support (6) et le bras (2) permettant un mouvement de translation du bras (2) sur ledit organe de support (6) dans une direction sensiblement parallèle à la dimension longitudinale du bras (2), les moyens de couplage entre l'organe de support (6) et le bras (2) comprenant une pièce de liaison (50) s'étendant sensiblement dans le prolongement du bras (2), et à une extrémité de laquelle est fixé le bras (2), caractérisé en ce que la pièce de liaison (50) est munie d'une rainure (52) longitudinale dans laquelle coulisse une goupille (54) solidaire de l'organe de support (6), l'extrémité opposée de la pièce de liaison étant fixée à rotation sur ladite manivelle (24).

2. Dispositif d'essuie-glace selon la revendication 1, caractérisé en ce que les moyens moteurs comportent en outre un engrenage formé d'au moins une première roue dentée (30) et d'une deuxième roue dentée (32) montées respectivement sur ledit premier (26) et ledit deuxième (34) axes moteurs.

3. Dispositif d'essuie-glace selon la revendication 2, caractérisé en ce que l'une desdites roues dentées (30) est couplée à un système de transmission (40) capable de produire un mouvement de rotation alternatif à partir d'un mouvement de rotation continu d'un axe de sortie d'un moteur électrique (42).

## Claims

1. Windshield wiper arrangement including a windshield wiper arm (2) the active length of which varies in the course of the sweeping movement including :
- motor means including a first motor shaft (26) given a first alternating rotation motion and a second motor shaft (34) given a second alternating rotation motion, the amplitude of the alternating rotation of the second shaft (34) being greater than that of the first shaft;
- a crank (24) coupled for rotation onto the second motor shaft, on the one hand, and, on the other hand, articulated onto said arm (2);
- an arm support element (6) coupled for rotation onto the first motor shaft (26); and
- coupling means between the support element (6) and the arm (2) permitting a translation motion of the arm (2) on said support element (6) in a direction substantially parallel to the longitudinal dimension of the arm (2), the coupling means between the support element (6) and the arm (2) comprising a connecting piece (50) extending substantially in the prolongation of the arm (2) and to one end of which the arm (2) is secured, characterized in that the connecting piece (50) is provided with a longitudinal groove (52) in which slides a pin (54) fixed to the support element (6), the opposite end of the connecting piece being fixed for rotation onto said crank (24).

2. Windshield wiper arrangement according to claim 1, characterized in that the motor means further include gearing formed by at least one first toothed wheel (30) and a second toothed wheel (32) respectively mounted on said first (26) and said second (34) motor shafts.

3. Windshield wiper arrangement according to claim 2, characterized in that one of said toothed wheels (30) is coupled to a transmission system (40) capable of producing an alternating rotation movement from a continuous rotation movement from an output shaft of an electric motor (42).

## Patentansprüche

1. Scheibenwischeranordnung, umfassend einen Scheibenwischerarm (2), dessen aktive Länge sich während der Wischbewegung ändert, umfassend:
- Motormittel mit einer ersten Motorachse (26), angetrieben zu einer ersten hin- und hergehenden Drehbewegung, und mit einer zweiten Motorachse (34), angetrieben zu einer zweiten hin- und hergehenden Drehbewegung, wobei die Amplitude der hin- und hergehenden Drehbewegung der zweiten Achse (34) größer ist als jene der ersten Achse,
- eine Kurbel (24) zur Drehung mit der zweiten Motorachse einerseits und mit dem Arm (2) andererseits gekoppelt,
- ein Stützorgan (6) des drehbeweglich mit der ersten Motorachse (26) gekoppelten Arms, und
- Kupplungsmittel zwischen dem Stützorgan (6) und dem Arm (2), die eine Translationsbewegung des Armes (2) auf dem Stützorgan (6) in einer Richtung im wesentlichen parallel zu der Längsabmessung des Armes (2) ermöglichen, wobei die Kupplungsmittel zwischen dem Stützorgan (6) und dem Arm (2) ein Verbindungsteil (50) umfassen, das sich im wesentlichen in der Verlängerung des Armes (2) erstreckt und das mit einem Ende an dem Arm (2) befestigt ist, dadurch gekennzeichnet, daß das Verbindungsteil (50) mit einer Längsnut (52) versehen ist, in der ein Stift (54) gleitet, der mit dem Stützorgan (6) verbunden ist, während das entgegengesetzte Ende des Verbindungsteils drehfest an der Kurbel (24) befestigt ist.

2. Scheibenwischeranordnung nach Anspruch 1, dadurch gekennzeichnet, daß die Motormittel ferner ein Getriebe umfassen, gebildet aus mindestens einem ersten Zahnrad (30) und einem zweiten Zahnrad (32), die auf der ersten (26) bzw. zweiten (34) Motorachse montiert sind.

3. Scheibenwischeranordnung nach Anspruch 2, dadurch gekennzeichnet, daß eines der Zahnräder (30) mit einem Übertragungssystem (40) gekuppelt ist, das in der Lage ist, eine Alternativdrehbewegung ausgehend von einer kontinuierlichen Drehbewegung einer Abtriebsachse eines Elektromotors (42) zu erzeugen.
